# EUROPEAN PATENT SPECIFICATION

(11) **EP 0 448 369 B1**
(45) Date of publication and mention of the grant of the patent: **08.10.1997**
(21) Application number: 91302399.0
(22) Date of filing: 20.03.1991
(51) Int. Cl.: H04M 1/66, G07F 7/08, H04M 17/02

(54) **Control of a card interface for access to a telephone apparatus**
Kontrolle einer Kartenschnittstelle für den Zugang zu einem Telefongerät
Contrôle d'un interface de carte pour l'accès à un appareil téléphonique

(30) Priority: 22.03.1990 FI 901450
(43) Date of publication of application: 25.09.1991
(73) Proprietor: NOKIA MOBILE PHONES LTD., 24101 Salo (FI)
(72) Inventor: Alanara, Seppo, SF-90800 Oulu (FI); Ojaniemi, Heikki, SF-90630 Oulu (FI)
(74) Representative: Johansson, Folke Anders

(56) References cited:
- EP-A- 0 185 365
- EP-A- 0 301 740
- EP-A- 0 335 768
- US-A- 4 731 818
- PATENT ABSTRACTS OF JAPAN vol. 13, no. 98 (P-840)8 March 1989 & JP-A-63 279 344
- PATENT ABSTRACTS OF JAPAN vol. 13, no. 198 (E-756)11 May 1989 & JP-A-1 020 742
- PATENT ABSTRACTS OF JAPAN vol. 12, no. 342 (E-658)14 September 1988 & JP-A-63 102 447

## Description

The invention relates to an arrangement in a telephone apparatus, the use of which takes place on the basis of an authorization given by a memory card or a smart card inserted at a given time for this purpose into the ap- paratus, the apparatus including at least means for checking the identification data of the card inserted into the apparatus and for activating the desired function after the acceptance of the data. The invention relates in particular to a radio telephone or the like which can be operated using a smart card or a memory card.

When an apparatus, e.g. a telephone, is operated using a smart card or a memory card so that the fee is debited either directly from this card or via some other route from the holder of the card, on the basis of an authorization given by this card, it is very important first to check the correctness of the card, i.e. its identification data, before the apparatus is set in operation, for example before placing a call. For checking the identification data of a card per se, numerous different methods have been suggested, for example in publication EP-333 918, in which the central unit transmits an identification signal and, if this signal agrees with the identification data of the card in the telephone, opens the line. The line will be open until the card is used in another location. Such an arrangement is highly unreliable, since calls can be placed by anyone, without limitation, once the line has been opened.

Publications EP-301740 and SE-456209 disclose systems in each of which the identification data of the card are checked every time an attempt is made to place a call. In EP-301740 this takes place so that, when a new apparatus is taken into use for the first time, it reads into its non-erasable memory the user identification code from a card, and will thereafter, whenever a call is placed or the apparatus is otherwise programmed, compare his identification code recorded in the memory to the identification data of the card, and if these do not agree, will not make a connection. In publication SE-456209 the checking is arranged in connection with the telephone exchange, in which case the identification code has, in addition to a fixed part, also a variable part which is dependent on the number of connections made and will change in the same manner in the radio telephone concerned and in the telephone exchange, but it cannot be detected by an outside monitor listening to the transmissions in the way fixed codes can, since he cannot by any means know the number of calls which have been placed by a given time. In addition, the publication presents an additional code which is used only in exceptional cases and thus cannot be detected easily by an outside monitor. In this arrangement, also, a checking is always made when a call is placed.

In the arrangements of publication EP-333 918 and in other similar arrangements, of which type the systems currently used mainly are, a card can be replaced in a telephone by using a thin plastic strip having the shape of a card. After this trick, in the case of a memory card, the telephone remains registered in accordance with the data of the previous card, whereupon telephone calls can be made arbitrarily on the account of the previous card. In the case of a processor card and in cases applying telephone-specific checking of the identification data, as in EP-301740 or SE-456209, misuse is not quite so easy but requires that a call is always placed using the correct card and the card can be replaced only after the call has been connected. However, even this alternative makes considerable misuse possible, since a card can, even for extensive misuse, be taken into use without authorization only for a moment, in which case the correct holder of the card will not necessarily notice it, or one and the same card can be used for activating a number of apparatuses simultaneously, and especially if some function other than a telephone call is concerned, for example bank services or the like, misuse for a very short time may make possible long-term damage which will be expensive.

Voice identification and fingerprint checking have been suggested as one possibility for detecting misuse, as in publication DE-3 438 106, but such systems are very expensive, and for the time being also unreliable. Other methods for preventing the replacing of a card include placing the card in a mobile slide controlled by a switch; the card is placed in the slide and the entire slide with the card is pushed into the apparatus. Another corresponding structure is presented in the publication NO-874965, in which the card is placed in a swivelling compartment or under a swivelling cover, which is controlled by a switch. In these models, misuse is not equally easy, since the card is very difficult to remove without making the switch which controls the slide, cover or the like move at the same time. Such an operation is, however, possible by sawing an opening into the apparatus, via which opening the cards can be replaced.

The main object of the invention is thus to provide an arrangement in a telephone apparatus by which it can be ensured that the card by means of which the apparatus was originally activated has not been replaced by another card even during a call or any other operation. It is a preferred object of the invention to provide an arrangement in a telephone apparatus by means of which this checking can be carried out with a minimal consumption of current and, additionally, to provide an arrangement compatible with this, by means of which the use of a card will even otherwise take place with a minimal consumption of current, in order to maximize the period of use of a portable apparatus before the replacement of batteries or the recharging of batteries.

The present invention, is defined in the appended claims and gives rise to a crucial improvement with respect to the disadvantages described above.

It can be deemed to be the most important advantage of the invention that by means of the arrangement it is possible completely to prevent any that type of misuse of a memory card or a smart card in which the card which has given the authorization could be removed from the apparatus while its use is still being continued. Another advantage of the invention is that the consumption of current required by the card operations can be minimized, thus making, for example, long-time use of a portable apparatus possible.

The invention is described below in greater detail.

The invention relates to a telephone apparatus which uses a smart card or a memory card. By the use of the invention it is possible to check gaplessly that the card by means of which the apparatus was activated has not been replaced by another card. In this context 'activation' means that the apparatus has been connected to some data communications network by giving to the network the identification code contained in the card. For example, in radio telephone communication a telephone is registered into a network (=system) by notifying the network of the telephone number and/or some other additional code contained in the card, which data are compared with the data recorded in the apparatus and/or in the telephone exchange, whereafter the apparatus, e.g. a telephone, will switch to the operating mode as a result of this checking, making the selection of a number or the connecting of the selected number possible.

Smart cards and memory cards are small-sized modules, usually the size of a credit card, which contain recorded data. From a memory card the data can be only read - they cannot in any way be controlled interactively. A smart card contains the same identification data as a memory card, but the data on it have been protected so that only a person knowing a certain numerical code can have access to the data on the card, i.e. can use the card. On both card types the data are recorded in a semiconductor memory, or on memory cards alternatively on a magnetic strip. Likewise, from both cards it is possible to read the information by using contact surfaces on the surface of the card. The readable information is obtained as a series-form signal via one contact surface. Hereinafter, by the word 'card' is meant a smart card or a memory card. The identification data on each of the cards usable in one and the same network are unambiguous.

In order to fulfill the conditions for connection to a data communications network the apparatus must by some method ensure that another user, desiring advantage without compensation, will not, after registering into the system, replace the card inserted into the apparatus in such a manner that the apparatus will not detect the replacing of the card. In such a case the apparatus would have registered into the network with a false identification code.

According to the invention, the operation takes place according to the following process. The apparatus, in this case thus a telephone, includes an erasable memory unit or alternatively a non-erasable memory unit. In the case of an erasable memory unit, each time the apparatus is taken into use with the help of a card (for example, a telephone call is placed), the identification code of the card is compared in a manner known per se with the data recorded in the apparatus itself or in the telephone exchange, and when the code has been accepted, this code and a possible separate other code of the card are recorded in this erasable memory unit. In this connection the apparatus is also registered into the system, i.e. in this case into the data communications network. According to the invention, after this the checking that the card is in place is carried out by repeating, at predetermined time intervals, the reading of the identification data of the card and their comparing with the identification data which were recorded in the said erasable memory unit at the time the apparatus was registered for the said cycle of use. If the data agree, the operation of the apparatus will continue so that the user will not notice anything, but if these two sets of identification data do not agree, the comparison unit which is for this purpose in the apparatus will disconnect the operation and connections of the apparatus. At the same time, of course, the debiting is discontinued, and thus the longest possible time of misuse is the time interval between two successive checkings of the identification data. The identification data are erased from the memory unit either upon the termination of the entire operation, i.e. the registration of the telephone or the like, or only when the card is taken out of the apparatus.

When a non-erasable memory unit is used, the operation is in other respects the same as described above, but the identification data are read only once when the apparatus is taken into use, as in publication EP-301740, but with the exception that the identification data of the card in the apparatus are checked not only every time the apparatus is registered into the network, i.e. for example when a telephone call is being placed, but also at predetermined time intervals during the telephone call or other operation, as described in the previous paragraph.

The above-mentioned checking time interval is measured by a timer located in the apparatus and the above-mentioned comparison is done in the mentioned comparison unit on the basis of a signal given by the timer when a checking time interval has been measured. The aim is to set as long a possible checking time interval so that the comparing will cause as little wear to the batteries as possible. Comparing at intervals of approximately one minute has in general been found suitable. Thus the apparatus can be fraudulently registered into a network for a maximum of this time interval, i.e. for approximately one minute. This checking interval may be constant, in the manner described above, or it may be programmed to vary in a predetermined manner so that, after the registration of the apparatus, the comparing is carried out at shorter time intervals and, as time passes, the checking interval is lengthenea by degrees. This can be done, since the longer the operation carried out with the original card continues, the smaller the use gained from the replacement of the card will in general be. It is also possible to use checking time intervals which vary at random, in order to increase the mean time interval and to make it more difficult to anticipate.

In many cases, for example in the case of a car telephone, the user keeps his card in the telephone continuously when he is in the vicinity of the apparatus or keeps his apparatus with him. In this case, however, there is not a call in progress continuously but the apparatus is in a mode of readiness or, even if there is a call in progress, the need for the card operation is not continuous. However, during the mode of readiness and also during a telephone call, information is not needed from the card continuously and it need not be fed onto the card. In this case the consumption of current by the apparatus can be reduced by disconnecting the supply voltage from the card when a certain predetermined time has elapsed from the last card operation. This time is preferably measured by the same timer that measures the said checking time interval. When the said predetermined disconnecting interval has elapsed from a card operation, the card interface is deactivated and the supply voltage of the card is disconnected. At the time of the following card operation thereafter, the supply voltage is connected, the card interface is activated, and the card is primed to the mode which preceded the disconnecting of the voltage. In connection with this initiation of the card interface, before the actual card operation, it is preferable always to carry out a comparison of the identification data, regardless of whether the timer has given a signal for this or not. Another possibility for initiating a card operation is to delay it until the timer gives a signal for the next comparison of the identification data, and after this has been done, to carry out the card operation immediately.

In the manner described above the remaining in place of the correct card can be thus ensured and the consumption of current by the card can be minimized. In terms of circuitry techniques, the arrangement according to the invention can be implemented in a plurality of ways. The invention is applicable not only to radio telephones and to ordinary telephones, but also to other telephone apparatuses which are operated using memory cards or smart cards.

## Claims

1. Telephone apparatus, the operation of which takes place on the basis of an authorization given by identification data on a memory card insertable for this purpose into the apparatus, the apparatus including means for checking the identification data of the card introduced into the apparatus and for activating the desired function of the apparatus after the acceptance of the data, characterized in that the apparatus further comprises
a memory unit in which, whenever the apparatus is operated using a card, the checked and accepted identification data of the card are recorded;
a timer for measuring a checking time interval at which the the identification data is repeatedly read from the card and for giving a signal for each checking time interval, and
comparison means which, on the basis of a signal given by the timer, carries out a comparison of the card identification data and the identification data recorded in the memory unit, and causes the function of the apparatus to be terminated in the event that the result of the comparison is that the compared identification data are not mutually identical.

2. Telephone apparatus according to Claim 1, characterized in that the said memory unit is a non-erasable memory, in which case the operation recording the identification data of a card is the actual initiation of the apparatus, whereafter the identification data will remain in the apparatus as a constant for comparison; or alternatively the said memory unit is an erasable memory, in which case the operation which records the identification data of a card is any checked and accepted registration made using the card, the identification data recorded for the purpose of identification being erased from the memory unit at the end of the said registration or at the time when the card is removed from the apparatus.

3. Telephone apparatus according to Claim 1 or 2, characterised in that the checking time interval is a constant predetermined time period or, alternatively a time period varying between predetermined limits.

4. Telephone apparatus according to Claim 3, characterized in that the comparison time interval provided by the timer is arranged to increase, preferably progressively, as the time which has elapsed from the latest card operation increases, which time is also separately measured by the timer, or alternatively the comparison time interval provided by the timer is arranged to vary at random.

5. Telephone apparatus according to any of the preceding claims, characterised in that the said comparison means always carries out the said comparison of the identification data, with the consequences, in connection with a card operation of the system, regardless of the signal given by the timer.

6. Telephone apparatus according to any of the preceding claims, characterised in that the said comparing means disconnects a supply voltage to the card whenever a predetermined time has elapsed from the last card operation, and immediately after each comparison of the identification data.

7. Telephone apparatus according to Claim 6, characterised in that, when a system or an operator feeds into the apparatus a function order or part of it in any manner, the card-control circuit in the apparatus is arranged to be activated immediately or, alternatively, to wait for the next comparison signal given by the timer and then to be activated and, as continuation to the activation carried out at any given time, to prime the card into the mode which preceded the disconnecting of the voltage, and to prime the said comparison means to carry out the comparison with the identification data and its consequences, before a card operation.

## Patentansprüche

1. Telefonapparat, dessen Betrieb auf einer Autorisierung basiert, die aufgrund von Identifikationsdaten auf einer zu diesem Zweck in den Apparat einführbaren Speicherkarte gegeben wird, wobei der Apparat Mittel zur Überprüfung der Identifikationsdaten der in den Apparat eingeführten Karte enthält, sowie Mittel zur Aktivierung der gewünschten Funktion des Apparats nach dem Akzeptieren der Daten, **dadurch gekennzeichnet,** daß der Apparat ferner folgendes enthält:
eine Speichereinheit, in der die überprüften und akzeptierten Identifikationsdaten der Karte jedesmal gespeichert werden, wenn der Apparat mit einer Karte betrieben wird;
einen Zeitmesser zur Messung eines Überprüfungs-Zeitintervalls, in dem die Identifikationsdaten wiederholt von der Karte gelesen werden, sowie zur Signalgebung für Jedes Überprüfungs-Zeitintervall; und
Vergleichsmittel, die basierend auf einem vom Zeitmesser gegebenen Signal die Karten-Identifikationsdaten mit den in der Speichereinheit abgespeicherten Identifikationsdaten vergleichen, und die die Funktion des Apparats beenden, falls die verglichenen Identifikationsdaten nicht gegenseitig identisch sind.

2. Telefonapparat nach Anspruch 1, **dadurch gekennzeichnet,** daß die Speichereinheit als nicht löschbarer Speicher ausgebildet ist, so daß die Operation zur Aufzeichnung der Identifikationsdaten einer Karte die eigentliche Initiierung des Apparats darstellt, wonach die Identifikationsdaten für Vergleichszwecke als Konstante in dem Apparat verbleiben; oder daß die Speichereinheit alternativ als löschbarer Speicher ausgebildet ist, so daß in diesem Fall die Operation zur Aufzeichnung der Identifikationsdaten einer Karte irgendeine geprüfte und akzeptierte Registrierung mit der Karte darstellt, wobei die zu Identifikationszwecken aufgezeichneten Identifikationsdaten am Ende des Registriervorgangs oder wenn die Karte aus dem Apparat herausgenommen wird aus der Speichereinheit gelöscht werden,

3. Telefonapparat nach Anspruch 1 oder 2, **dadurch gekennzeichnet,** daß das Überprüfungs-Zeitintervall gleich einer konstanten vorbestimmten Zeitperiode oder alternativ gleich einer zwischen vorbestimmten Grenzwerten veränderbaren Zeitperiode ist.

4. Telefonapparat nach Anspruch 3, **dadurch gekennzeichnet**, daß das durch den Zeitmesser gebildete Vergleichs-Zeitintervall größer werden kann, vorzugsweise progressiv, wenn die seit der letzten Kartenoperation verstrichene und ebenfalls durch den Zeitmesser separat gemessene Zeit zunimmt, oder daß sich alternativ das durch den Zeitmesser gebildete Vergleichs-Zeitintervall zufällig verändert.

5. Telefonapparat nach irgendeinem der vorangegangenen Ansprüche, **da durch gekennzeichnet**, daß in Verbindung mit einer Kartenoperation des Systems die Vergleichsmittel jedesmal den Vergleich bezüglich der Identifikationsdaten durchführen, und zwar unabhängig von dem durch den Zeitmesser gegebenen Signal.

6. Telefonapparat nach irgendeinem der vorangegangenen Ansprüche, **dadurch gekennzeichnet,** daß Jedesmal wenn eine vorbestimmte Zeit seit der letzten Kartenoperation verstrichen ist sowie sofort nach jedem Vergleich der Identifikationsdaten die Vergleichsmittel eine Spannungsversorgung der Karte unterbrechen.

7. Telefonapparat nach Anspruch 6, **dadurch gekennzeichnet**, daß die Kartensteuerschaltung in dem Apparat sofort aktivierbar ist, wenn ein System oder ein Operator einen Funktionsbefehl oder einen Teil von diesem auf irgendeine Weise in den Apparat eingibt, oder aber daß alternativ die Kartensteuerschaltung in dem Apparat auf das nächste durch den Zeitmesser gegebene Vergleichssignal wartet, um dann aktiviert zu werden und als Fortsetzung der zu irgendeiner Zeit erfolgten Aktivierung die Karte in die Betriebsart zu setzten, die der Trennung von der Spannungsversorgung vorausgegangen ist, und um die Vergleichsmittel vor einer Kartenoperation anzuweisen den Vergleichsvorgang mit den Identifikationsdaten mit allen Konsequenzen durchzuführen.

## Revendications

1. Appareil téléphonique, dont le fonctionnement a lieu sur la base d'une autorisation donnée par des données d'identification sur une carte à mémoire insérable à cette fin dans l'appareil, l'appareil comprenant des moyens pour vérifier les données d'identification de la carte introduite dans l'appareil et pour activer la fonction désirée de l'appareil après l'acceptation des données, caractérisé en ce que l'appareil comprend de plus
une unité de mémoire dans laquelle, chaque fois que l'appareil est mis en oeuvre en utilisant une carte, les données d'identification vérifiées acceptées de la carte sont enregistrées ;
un temporisateur pour mesurer un intervalle de temps de vérification pendant lequel les données d'identification sont lues de manière répétée à partir de la carte et pour délivrer un signal pour chaque intervalle de temps de vérification, et
des moyens de comparaison qui, sur la base d'un signal délivré par le temporisateur, effectuent une comparaison des données d'identification de la carte et des données d'identification enregistrées dans l'unité de mémoire, et amènent la fonction de l'appareil à être terminée dans le cas où le résultat de la comparaison avec celui des données d'identification comparées ne sont pas mutuellement identiques.

2. Appareil téléphonique selon la revendication 1, caractérisé en ce que ladite unité de mémoire est une mémoire rémanente, dans lequel cas l'opération d'enregistrement des données d'identification d'une carte est à l'initiation actuelle de l'appareil, après quoi les données d'identification resteront dans l'appareil comme une constante pour comparaison ; ou, en variante, ladite unité de mémoire est une mémoire effaçable, dans lequel cas l'opération qui enregistre les données d'identification d'une carte est un enregistrement chaque fois vérifié et accepté fait en utilisant la carte, les données d'identification enregistrées à des fins d'identification étant effacées de l'unité de mémoire à la fin dudit enregistrement et au moment où la carte est enlevée de l'appareil.

3. Appareil téléphonique selon la revendication 1 ou 2, caractérisé en ce que l'intervalle de temps de vérification est un intervalle de temps prédéterminé constant ou, en variante un intervalle de temps variant entre des limites prédéterminées.

4. Appareil téléphonique selon la revendication 3, caractérisé en ce que l'intervalle de temps de comparaison procuré par le temporisateur est conçu pour augmenter de préférence progressivement à mesure que le temps qui s'est écoulé à partir de l'opération de carte la plus récente augmente, lequel temps est également mesuré de manière séparée par le temporisateur ou, en variante, l'intervalle de temps de comparaison délivré par le temporisateur est conçu pour varier de manière aléatoire.

5. Appareil téléphonique selon l'une quelconque des revendications précédentes, caractérisé en ce que lesdits moyens de comparaison effectuent toujours ladite comparaison des données d'identification, avec pour conséquences une liaison avec une opération de la carte du système, sans tenir compte du signal délivré par le temporisateur.

6. Appareil téléphonique selon l'une quelconque des revendications précédentes, caractérisé en ce que lesdits moyens de comparaison déconnectent une tension d'alimentation de la carte chaque fois qu'un temps prédéterminé s'est écoulé à partir de la dernière opération de la carte et immédiatement après chaque comparaison des données d'identification.

7. Appareil téléphonique selon la revendication 6, caractérisé en ce que, lorsqu'un système ou un opérateur délivre à l'appareil ou à une partie de celui-ci un ordre fonctionnel de toute manière quelconque, le circuit de commande de la carte dans l'appareil est conçu pour être immédiatement activé ou, en variante, attendre le signal de comparaison suivant délivré par le temporisateur et ensuite être activé et, comme continuation à l'activation effectuée à tout instant donné, place la carte dans le mode qui précède la déconnexion de la tension et place ledit moyen de comparaison prêt à effectuer la comparaison avec les données d'identification et en liaison avec une opération de la carte.
